# EUROPEAN PATENT SPECIFICATION

(11) **EP 0 956 482 B1**
(45) Date of publication and mention of the grant of the patent: **14.05.2003**
(21) Application number: 97947059.8
(22) Date of filing: 12.12.1997
(51) Int. Cl.: F24H 3/04, F26B 13/10

(54) **METHOD AND APPARATUS FOR PRODUCING HEATED AIR FOR DIFFERENT APPLICATIONS OF USE**
VERFAHREN UND ANLAGE ZUR HEISSLUFTPRODUKTION FÜR UNTERSCHIEDLICHE EINSATZZWECKE
PROCEDE ET DISPOSITIF DE PRODUCTION D'AIR CHAUD POUR DIFFERENTES APPLICATIONS

(30) Priority: 17.12.1996 FI 965060; 17.12.1996 FI 965061
(43) Date of publication of application: 17.11.1999
(73) Proprietor: Ecopower Technology Oy, 01480 Vantaa (FI)
(72) Inventor: NIKUNEN, Hannu, FIN-01480 Vantaa (FI)
(74) Representative: LEITZINGER OY
(86) International application number: FI9700779
(87) International publication number: WO98027391

(56) References cited:
- EP-A- 0 011 230
- EP-A- 0 326 228
- US-A- 3 668 785
- US-A- 4 575 952

## Description

The present invention relates generally to a method and apparatus for producing hot air for various applications, a method for feeding fuel and combustion air and a burner assembly. One particular object of the invention is the heating and recirculation of air intended for drying a paper web. Another particular object of the invention is a method and apparatus for the heating and recirculation of air intended for heating large spaces and/or for drying various products. Yet another particular object of the invention is a method and a burner assembly for feeding fuel and combustion air in a combustion assembly fitted with a firing chamber.

In prior art solutions, the drying of e.g. a paper web is typically performed by using assemblies provided with heavy-duty blowers, said blowers delivering pressurized combustion air into a burner, the combustion of fuel therein being followed by circulating the heated combustion air to an intended application and then back to the blower. The system includes necessary air ducts for supplementary air in order to compensate for the oxygen consumed in the burner. Such prior art systems require the use of bulky blowers and burners, which increase manufacturing costs and take up a lot of space. The US Patent 3,668,785, Rodwin, discloses a paper web drying apparatus utilizing a gas generator. On the other hand, the combustion assemblies, having an output of e.g. 1 MW - 100 MW, also employ such typically bulky blowers, which are expensive and take up a lot of space. The published EP application 0 011 230 A3 describes a burner unit making use of an ejector device.

Thus, one object of the present invention is to provide a relatively simple method and apparatus for the heating and recirculation of air intended for heating a variety of large spaces and/or for drying a variety of products, the present solution enabling a substantial reduction in the size of the apparatus and, thus, a significant reduction in installation costs and investment costs. Yet another object of the present invention is to provide a likewise relatively simple and effective method and burner assembly for feeding fuel and combustion air in a combustion apparatus fitted with a firing chamber, said apparatus being more compact and less expensive in terms of costs than those designed to include traditional blowers.

In order to fulfil these objects, a method of the invention is characterized by what is set forth in the characterizing clauses of the independent method claims 1 and 5. On the other hand, an apparatus of the invention is characterized by what is set forth in the characterizing clauses of the independent claims 9 and 12.

The invention will now be described with reference made to the accompanying drawings, in which:
- fig. 1: shows one schematic exemplary embodiment of an apparatus suitable for the implementation of a method of the invention,
- figs. 2: and 3 show in the same scale a comparison between the spaces required by an apparatus of the invention and a similar prior art apparatus, respectively, and
- fig. 4: shows schematically a burner assembly suitable for the implementation of another method of the invention.

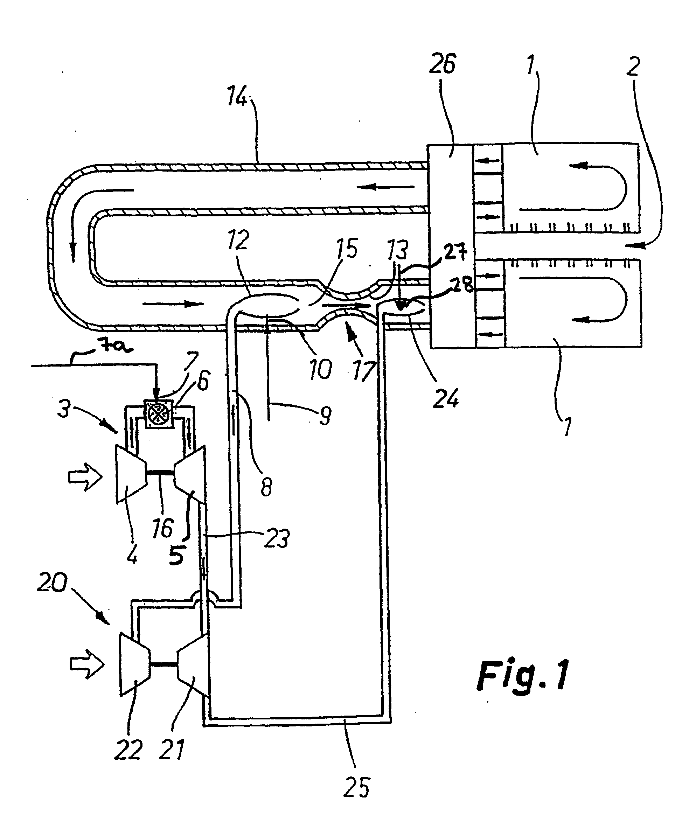

The apparatus embodiment shown in fig. 1 displays a system for the heating and recirculation of air intended for drying a paper web in accordance with the invention. The scheme is not made to scale but it only shows in principle the disposition of certain elements needed in this particular exemplary embodiment of the invention. The system includes a return air duct 14 provided with a distribution box 26, whereby the drying air is distributed into two superimposed drying air nozzle boxes 1, the paper web to be dried being adapted to advance in a gap 2 therebetween. In the nozzle boxes 1, the air is circulated by way of the paper web surface into an intake side duct, the drying air being blown to either side of the web and discharged from the same given blowing side.

The apparatus further includes a gas generator 3 fitted with a compressor 4 and a turbine 5, connected together with a shaft 16, and an ejector unit 17 fitted in the return air duct and provided with an accelerating nozzle 12 functioning as a firing or combustion chamber. The compressor 4 feeds air into a firing chamber 6, included in the gas generator 3 and supplied with fuel along a conduit 7a from a fuel jet 7. The combustion occurring in the firing chamber 6 results in the generation of a heated and pressurized combustion gas flow, which is delivered by way of the turbine 5 to a turbine 21, which is included in a second compressor-turbine unit 20 linked to the gas generator and which operates a compressor 22, which in turn feeds "cold" pressurized combustion air along the conduit 8 into the accelerating nozzle 12 fitted inside the return air duct 14. The "cold" combustion air may be air at ambient temperature or possibly preheated return air. In this context, the term "cold" combustion air refers to the fact that it has a temperature which is considerably lower than that of the heated combustion air generated in the firing chamber of the gas generator, the latter being typically about 500-700°C. The return air is heated by feeding fuel into the accelerating nozzle 12 along a conduit 9 from a fuel jet 10. The accelerating nozzle 12 is used to effect a substantially complete combustion of the fuel delivered therein. The achievement reached by such a solution is that the return air cannot entrap any particles that could impair the quality of a paper web. As a result of the combustion taking place in the accelerating nozzle 12, the gas mixture discharging from an orifice 15 heats up and acquires a considerable extra velocity, said gas mixture then passing through a throttle portion 13, said throttle portion 13 being designed in a section of the return air duct 14 downstream of the accelerating nozzle 12. This flow from the accelerating nozzle 12 creates an ejector action, which aspirates return air present in the return air duct 14 into the heated gas flow emerging from the accelerating nozzle 12. Thus, said return air warms up while being conducted to the nozzle boxes 1.

The heated and pressurized gas flow supplied to the turbine 21 of the second compressor-turbine unit 20 is delivered further along a conduit 25 to an additional nozzle 24, which can be used to effect an extra combustion for an increased heating effect and/or for incinerating the impurities possibly present in the combustion gases. Inside the additional nozzle is fitted a fuel jet 28 for delivering the fuel flowing along a conduit 27 inside the additional nozzle 24. The additional nozzle functions as a firing chamber the same way as the accelerating nozzle 12.

The solution shown in fig. 1 and provided with the compressor-turbine unit 20 enables the generation of a relatively high pressure (e.g. in the order of 100-400 kPa) inside the accelerating nozzle 12 for an action as effective as possible. The embodiment of fig. 1 can also conceivably be construed as a simplified version, wherein the heated and pressurized combustion air generated by means of the gas generator 3 would be delivered from the turbine 5 to the accelerating nozzle 12, the additional nozzle 24 and the compressor-turbine unit 20 thus being unnecessary. In such a solution, however, the pressure existing in the accelerating nozzle is in the order of 10-15 kPa and, thus, the apparatus will have a lesser capacity than the embodiment of fig. 1. In this solution, it could be conceivable to design the accelerating nozzle as something other than a firing chamber, e.g. in such a design that the heated and pressurized gas flow emerging from the gas generator acquires an accelerated speed upon leaving the accelerating chamber 12.

The apparatus and method of the invention are also applicable to the heating and/or dehumidification of various industrial buildings and similar large spaces, whereby the return air duct 14 is not connected to the nozzle boxes 1 but instead with the relevant space or drying apparatus to be heated in such a manner that the return air progresses from the first end of the return air duct to this particular space or drying apparatus and thence to the second end of the return air duct and further along the return air duct to the first end of said return air duct. The air duct 14 can also be adapted only to carry heated outdoor air into the discussed space, the air exhausted from the space not being returned into said space.

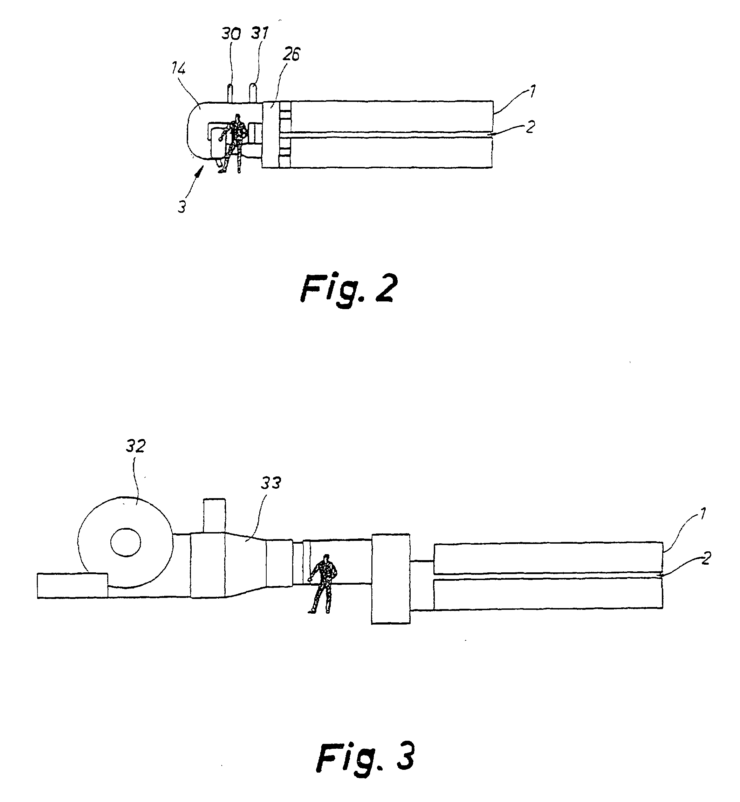

Figs. 2 and 3 demonstrate the dimensional comparison between an apparatus configuration corresponding to the embodiment of fig. 1 and an apparatus according to the prior art. As shown in these comparison figures, the demand for space is reduced significantly with the configuration of the invention. In fig. 2, reference numeral 30 indicates a compensating air duct and reference numeral 31 an exhaust air duct, while in fig. 3, reference numeral 32 indicates a blower and reference numeral 33 a burner. The rest of the reference numerals are consistent with elements illustrated in fig. 1.

The solution of the invention is also conceivably implemented e.g. in such a way that the drying air migrates through a web material to be dried or through a stream of products constituted by bulk goods from a nozzle box on one side of the web/stream of products to a nozzle box on the opposite side thereof and further into a return air duct extending between the nozzle boxes.

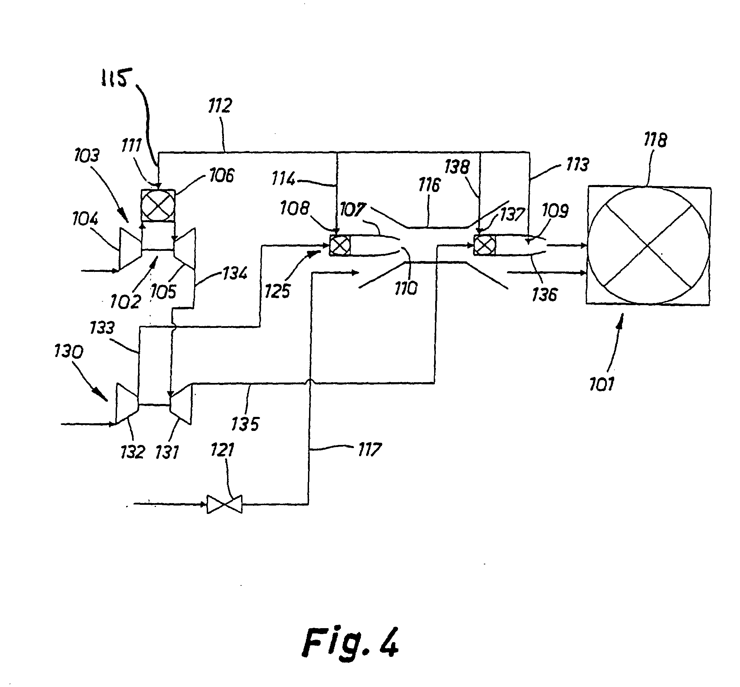

The burner arrangement of the invention shown in fig. 4 comprises a burner assembly 102, which is connected with a firing box 118 of a combustion apparatus 101 and which includes a gas generator 103 provided with a compressor 104 for pressurizing and feeding the combustion air into a firing chamber 106 of the gas generator 103. The firing chamber 106 is supplied with a first fuel jet 111 for feeding fuel coming along a conduit 115 and the heated and pressurized combustion air resulting from combustion is conducted by way of a conduit 134 from a turbine 105 to a turbine 131, mounted on the back of the gas generator 103 and included in a separate compressor-turbine unit 130, said turbine 131 driving a compressor 132 which feeds pressurized combustion air via conduit 133 to an accelerating nozzle 107 of an ejector unit 125, which nozzle is mounted on the inside of an inlet air duct 117 extending to the firing box 118. Inside the accelerating nozzle 107 is fitted an additional fuel jet 108 for feeding fuel coming along a conduit 114. The accelerating nozzle 107 effects at least partially the combustion of fuel fed from the fuel jet 108 and the combustion energy produced by this combustion results in the gasification of the rest of the fuel present in the accelerating nozzle and the outflow of a gasified and possibly still burning gas mixture from an orifice 110 of the accelerating nozzle 107 into an inlet air duct 117 surrounding the accelerating nozzle 107. The inlet air duct 117 is provided with a throttle portion 116 downstream of the orifice 110 of the accelerating nozzle 107 in the combustion air flowing direction, the accelerating nozzle 107, the throttle portion 116, and the inlet air duct 117 together constituting an ejector unit 125. Furthermore, the embodiment of fig. 4 includes an atomizing nozzle 136 fitted in the inlet air duct 117 downstream of the throttle portion 116. This atomizing nozzle functions for diffusing and blending the main fuel with combustion air emerging from the ejector unit 125. The atomizing nozzle 136 is supplied via conduit 135 with the heated combustion air generated by the gas generator 103 by way of the turbines 105 and 131, said combustion air being supplied with fuel through a conduit 138 and a jet 137. The atomizing nozzle 136 effects at least partially the combustion of the fuel delivered from the fuel jet 137 and the combustion energy produced by this combustion results in the gasification of the rest of the fuel present in atomizing nozzle and the outflow of a heated and possibly still burning gas mixture at a high velocity. A jet 109 for the main fuel coming along a conduit 113 is fitted in the atomizing nozzle 136 just upstream of its orifice, whereby the main fuel blends effectively in a gas mixture flowing at a high velocity out of the atomizing nozzle and does not burn for the most part until in the firing box 118. It is also conceivable that the main fuel jet 109 be mounted outside the atomizing nozzle 136, immediately or further downstream of the atomizing nozzle 136 in the inlet air duct 117.

The inlet air duct 117 is preferably provided with a flap valve 121 for controlling the amount of incoming air arriving in the inlet air duct. As the power demand is exceptionally low, e.g. within the range of 250 kW - 1 MW, the power demand can be sufficiently satisfied by using a gas generator with a nominal value of 1 MW, whereby the entire required amount of combustion air can be passed therethrough and the flap valve 121 can be completely shut. In fig. 4, the supply of fuel is conceived to take place along a conduit 112, the conduits 113, 138, 114, and 115 branching therefrom to the fuel jets 109, 137, 108, and 111, respectively. Naturally, the fuel could be fed individually to each jet and possibly a different fuel could be used at different points.

The embodiment of fig. 4 provided with a compressor-turbine unit, wherein the orifice 110 of the accelerating nozzle 107 has preferably a pressure of about 100 kPa, enables mathematically the achievement of a combustion capacity of up to about 50 MW by using a 1 MW gas generator. The mathematical feed rates of fuel, when using a 1 MW gas generator, are as follows: about 20 l/h from jet 111 to gas generator 3, about 100 l/h from jet 118 to accelerating nozzle 107, about 80 l/h from jet 137 to atomizing nozzle 136, and about 5000 l/h from main fuel jet 109. The gas mixture has a mathematically calculated flow rate of about 600 m/s at the orifice of the accelerating nozzle 107 and the atomizing nozzle 136. The gas mixture has a calculated temperature of about 1100°C at the orifice of the accelerating nozzle 107 and, respectively, about 500-1100°C at the orifice of the atomizing nozzle 136.

It is also conceivable that the embodiment of fig. 4 be implemented without the compressor-turbine unit 130 and the atomizing nozzle 136, the heated and pressurized combustion air generated by the gas generator 2 being conducted directly to the accelerating nozzle 107, from which it is carried forward by way of the throttle portion 116 into the firing box 118. Thus, the accelerating nozzle functions as shown in the exemplary embodiment of fig. 4, boosting extra speed for the gas mixture flowing out of the nozzle 107.

The ejector unit can be a traditional ejector as shown in figs. 1 and 4 or some other type of ejector, such as a Vortex ejector.

## Claims

1. A method for producing and carrying hot air to its point of application, said method comprising the use of a gas generator (3), connected to an ejector unit (17) which is fitted in an air duct (14) and which includes a nozzle (12), the gas generator (3) being used in the method for generating pressurized combustion air which is conducted to the nozzle (12), the gas mixture flowing out of its orifice (15) into the air duct (14) surrounding the nozzle (12) and producing an ejector effect to entrap some of the air present in the air duct (14), said air being delivered to its point of application, **characterized in that** the nozzle (12) used in the method comprises an accelerating nozzle (12), which is supplied from fuel feed elements (9,10) with fuel which burns completely in the accelerating nozzle (12) and the gas mixture flows out of the orifice (15) of the accelerating nozzle (12) at an increased velocity.

2. A method as set forth in claim 1, **characterized in that** the gas generator (3) is used for generating pressurized and heated combustion air, which is conducted to a turbine (21) of a separate compressor-turbine unit (20) associated with the gas generator (3) for driving a compressor (22) connected therewith which delivers the pressurized combustion air to the accelerating nozzle (12), and that the heated and pressurized combustion air, delivered to the turbine (21) of the compressor-turbine unit (20) and arriving from the gas generator (3), is conducted to an additional nozzle (24) which is fitted in the duct (14) at a point downstream of the ejector unit (17), said additional nozzle (24) effecting extra combustion for producing extra heat for the heated air flowing in the air duct (14) and/or for burning the impurities possibly present in combustion gases.

3. A method as set forth in claim 1 or 2 for producing hot air, said hot air being intended for drying a web material or a stream of products constituted by bulk goods, **characterized in that** the method comprises the use of an arrangement which includes at least two superimposed drying air nozzle boxes (1), the web or stream of products to be dried being adapted to run in a gap (2) therebetween, said nozzle boxes (1) being connected together by said air duct (14), said heated air passing from the first nozzle box (1) through the web or stream of products to the second nozzle box (1) and further along the air duct (14) back to the first nozzle box (1).

4. A method as set forth in claim 1 or 2 for producing hot air, said hot air being intended for drying a paper web or similar web material, **characterized in that** the method comprises the use of an arrangement which includes a drying air nozzle box (1) mounted at least on one side of the web, said web to be dried being adapted to run past said box (1) and said nozzle box (1) being fitted with said air duct (14), the heated air passing from the nozzle box (1) against the web surface and back to said nozzle box (1) and further into the air duct (14).

5. A method for feeding fuel and combustion air in a combustion apparatus (101) fitted with a firing box (118) and a burner assembly (102) connected therewith, said burner assembly (102) comprising a gas generator (103) and duct elements (117) connected with the firing box (118) for conducting the incoming air serving as main combustion air into the firing box (118), said method comprising using an ejector unit (125), fitted in the incoming air duct (117) and including a nozzle (107) which is supplied with the pressurized combustion air generated by means of the gas generator (103) and flowing out of an orifice (110) of the nozzle (107) into the incoming air duct (117) surrounding the nozzle (107) entrapping said incoming air on an ejector principle, said method comprising feeding the amount of main fuel required by the power demand into the combustion air coming to and/or emerging from the ejector unit (125), **characterized in that** the nozzle (107) comprises an accelerating nozzle (107) fitted with feeding means, wherein the combustion air is supplied with additional fuel which burns at least partially in the accelerating nozzle (107) and the combustion energy achieves the gasification of the rest of the fuel present in the accelerating nozzle (107), the gas mixture flowing out of the orifice (110) at an increased velocity and heating up.

6. A method as set forth in claim 5, **characterized in that** the gas generator (103) is used for producing the heated and pressurized combustion air which is conducted (134) to a turbine (131) of a separate compressor-turbine unit (130) connected with the gas generator (103), said turbine driving a compressor (132), connected therewith and feeding (133) the pressurized combustion air to the accelerating nozzle (107) of the ejector unit, and that the heated and pressurized combustion air, coming from the gas generator (103) and fed to the turbine (131) of the compressor-turbine unit (130), is conducted (135) to an atomizing nozzle (136) fitted in the incoming air duct (117) downstream of the accelerating nozzle (107) for effecting combustion identical to what occurs in the accelerating nozzle (107), and the gas mixture produced by means of this combustion and flowing out of the atomizing nozzle at a high velocity is used for diffusing the main fuel and for mixing it with the main combustion air coming from the ejector unit.

7. A method as set forth in claim 5, **characterized in that** the main fuel (109) is fed into the gas mixture flowing out of the atomizing nozzle (136) inside the atomizing nozzle or at a point downstream of the atomizing nozzle in the incoming air duct (117).

8. A method as set forth in any of claims 5-7, **characterized in that** the amount of incoming air to be conducted into the incoming air duct (117) is regulated (121) according to a power demand.

9. An arrangement for producing and carrying heated air to a point of application for the heated air, said arrangement comprising an air duct (14) along which air is carried, a gas generator (3) and an ejector unit (17), connected with the gas generator (3) and fitted in the air duct (14) and provided with a nozzle (12) which is supplied with pressurized air from the gas generator (3), **characterized in that** the accelerating nozzle (12) includes fuel feed elements (9,10), said accelerating nozzle (12) functioning as a firing chamber for burning the fuel supplied from the feed elements (9,10), and the gas mixture flowing out of the accelerating nozzle (12) at an increased velocity entrapping and heating the air present in the duct (14).

10. An arrangement as set forth in claim 9, **characterized in that** the arrangement further includes a separate compressor-turbine unit (20), connected with the gas generator (3) and provided with a compressor (21) which feeds the pressurized combustion air to the accelerating nozzle (12) of the ejector unit (17), and that downstream of the ejector unit (17) the duct (14) is provided with an additional nozzle (24) fitted with fuel feed elements (28).

11. An arrangement as set forth in claim 9 or 10 for producing heated air and carrying it to an apparatus for drying a paper web or a similar web material, **characterized in that** the drying apparatus includes at least one drying air nozzle box (1), the web to be dried being adapted to run past the same, and the nozzle box (1) is fitted with said air duct (14), the heated air passing from the nozzle box (1) into contact with the web surface and back to said nozzle box (1).

12. A burner assembly (102) for a combustion apparatus (101) provided with a firing box (118), said burner assembly comprising a gas generator (103) provided with first fuel feed elements (111), and an air duct (117) connected with the firing box (118) for conducting combustion air into the firing box (118), said burner assembly (102) comprising an ejector unit (125), fitted in the air duct (117) and including a nozzle (107) for feeding pressurized combustion air, and said burner assembly (102) further comprising second fuel feed elements (108) for feeding main fuel into the combustion air coming to the ejector unit (123), **characterized in that** inside the accelerating nozzle (107) are fitted said second fuel feed elements (108), said accelerating nozzle (107) functioning as a firing chamber for burning the fuel delivered from the feed elements (108), and the heated gas mixture flowing out of the accelerating nozzle (107) at an increased velocity entraps and heats the air present in the duct (117).

13. An assembly as set forth in claim 12, **characterized in that** the assembly further comprises a separate compressor-turbine unit (130), connected with the gas generator (103) and provided with a compressor (132) for feeding the pressurized combustion air to the accelerating nozzle (107) of the ejector unit (125), and that downstream of the accelerating nozzle (107) the incoming air duct (117) is provided with an atomizing nozzle (136) for diffusing the fuel.

14. A burner assembly as set forth in claim 12-13, **characterized in that** the incoming air duct (117) is provided with regulating elements (121) for controlling according to a power demand the amount of air coming into the incoming air duct (117).

## Patentansprüche

1. Ein Verfahren zum Produzieren und Tragen warmer Luft zu ihrem Anwendungspunkt, wobei das Verfahren die Verwendung eines Gasgenerators (3) aufweist, der mit einer Ausstoßvorrichtungseinheit (17) verbunden ist, die in eine Luftleitung (14) eingepaßt ist, und die eine Düse (12) umfaßt, wobei der Gasgenerator (3) bei dem Verfahren zum Erzeugen unter Druck gesetzter Verbrennungsluft verwendet wird, die zu der Düse (12) geleitet wird, wobei die Gasmischung aus ihrer Öffnung (15) in eine Luftleitung (14) fließt, die die Düse (12) umgibt und eine Ausstoßwirkung erzeugt, um einen Teil der Luft einzuschließen, die in der Luftleitung (14) vorhanden ist, wobei die Luft zu ihrem Anwendungspunkt geliefert wird, **dadurch gekennzeichnet, daß** die Düse (12), die bei dem Verfahren verwendet wird, eine Beschleunigungsdüse (12) aufweist, die von den Kraftstoffzuführelementen (9, 10) mit Kraftstoff beliefert wird, der vollständig in der Beschleunigungsdüse (12) verbrennt, und die Gasmischung aus der Öffnung (15) der Beschleunigungsdüse (12) mit einer erhöhten Geschwindigkeit fließt.

2. Ein Verfahren gemäß Anspruch 1, **dadurch gekennzeichnet, daß** der Gasgenerator (3) zum Erzeugen einer unter Druck gesetzten und erwärmten Verbrennungsluft verwendet wird, die zu einer Turbine (12) einer separaten Kompressorturbineneinheit (20) geleitet wird, die dem Gasgenerator (3) zugeordnet ist, zum Treiben eines Kompressors (22), der mit demselben verbunden ist, der die unter Druck gesetzte Verbrennungsluft zu der Beschleunigungsdüse (12) liefert, und daß die erwärmte und unter Druck gesetzte Verbrennungsluft, die zu der Turbine (21) der Kompressorturbineneinheit (20) geliefert wird und von dem Gasgenerator (3) ankommt, zu einer zusätzlichen Düse (24) geleitet wird, die in die Leitung (14) an einem Punkt in Verarbeitungsrichtung abwärts von der Ausstoßvorrichtungseinheit (17) eingepaßt ist, wobei die zusätzliche Düse (24) eine zusätzliche Verbrennung zum Erzeugen von zusätzlicher Wärme für die erwärmte Luft, die in der Luftleitung (14) fließt, und/oder zum Verbrennen der Unreinheiten, die möglicherweise in den Verbrennungsgasen vorhanden sind, bewirkt.

3. Ein Verfahren gemäß Anspruch 1 oder 2 zum Erzeugen von warmer Luft, wobei die warme Luft zum Trocknen eines Gewebematerials oder eines Produktstroms vorgesehen ist, der aus Massengut zusammengesetzt ist, **dadurch gekennzeichnet, daß** das Verfahren die Verwendung einer Anordnung aufweist, die zumindest zwei übereinandergelagerte Trockenluftdüsenkästen (1) umfaßt, wobei das Gewebe oder der Produktstrom, der getrocknet werden soll, angepaßt ist, um in einem Zwischenraum (2) zwischen denselben zu laufen, wobei die Düsenkästen (1) miteinander durch die Luftleitung (14) verbunden sind, wobei erwärmte Luft von dem ersten Düsenkasten (1) durch das Gewebe oder den Produktstrom zu dem zweiten Düsenkasten (1) und weiter entlang der Luftleitung (14) zurück zu dem ersten Düsenkasten (1) passiert.

4. Ein Verfahren gemäß Anspruch 1 oder 2 zum Erzeugen von warmer Luft, wobei die warme Luft zum Trocknen eines Papiergewebes oder eines ähnlichen Gewebematerials vorgesehen ist, **dadurch gekennzeichnet, daß** das Verfahren die Verwendung einer Anordnung aufweist, die einen Trockenluftdüsenkasten (1) umfaßt, der an zumindest einer Seite des Gewebes befestigt ist, wobei das Gewebe, das getrocknet werden soll, angepaßt ist, um an dem Kasten (1) vorbeizulaufen, und der Düsenkasten (1) in die Luftleitung (14) eingepaßt ist, wobei die erwärmte Luft von dem Düsenkasten (1) gegen die Gewebeoberfläche und zurück zu dem Düsenkasten (l) und ferner in die Luftleitung (14) passiert.

5. Ein Verfahren zum Zuführen von Kraftstoff und Verbrennungsluft in eine Verbrennungsvorrichtung (101), die mit einem Brennkasten (118) und einer Brenneranordnung (102) ausgestaltet ist, die mit demselben verbunden ist, wobei die Brenneranordnung (102) einen Gasgenerator (103) und Leitungselemente (117) aufweist, die mit dem Brennkasten (118) verbunden sind, zum Leiten der ankommenden Luft, die als Hauptverbrennungsluft dient, in den Brennkaste (118), wobei das Verfahren das Verwenden einer Ausstoßvorrichtungseinheit (125) aufweist, die in die Eingangsluftleitung (117) eingepaßt ist und eine Düse (107) umfaßt, die mit der unter Druck gesetzten Verbrennungsluft beliefert wird, die mittels des Gasgenerators (103) erzeugt wird und aus einer Öffnung (110) der Düse (107) in die Eingangsluftleitung (117) fließt, die die Düse (107) umgibt und die Eingangsluft gemäß einem Ausstoßprinzip einschließt, wobei das Verfahren das Zuführen des Betrags an Hauptkraftstoff aufweist, der durch den Leistungsbedarf erforderlich ist, in die Verbrennungsluft, die zu der Ausstoßvorrichtungseinheit (125) kommt und/oder aus derselben austritt, **dadurch gekennzeichnet, daß** die Düse (107) eine Beschleunigungsdüse (107) aufweist, die in die Zuführeinrichtung eingepaßt ist, wobei die Verbrennungsluft mit zusätzlichem Kraftstoff beliefert wird, der zumindest teilweise in der Beschleunigungsdüse (107) verbrennt, und die Verbrennungsenergie die Vergasung des Rests des Kraftstoffs erreicht, der in der Beschleunigungsdüse (107) vorliegt, wobei die Gasmischung aus der Öffnung (110) mit einer erhöhten Geschwindigkeit fließt und erwärmt wird.

6. Ein Verfahren gemäß Anspruch 5, **dadurch gekennzeichnet, daß** der Gasgenerator (103) zum Erzeugen der erwärmten und unter Druck gesetzten Verbrennungsluft verwendet wird, die zu einer Turbine (131) einer separaten Kompressorturbineneinheit (130) geleitet wird (134), die mit dem Gasgenerator (103) verbunden ist, wobei die Turbine einen Kompressor (132) treibt, der mit derselben verbunden ist, und die unter Druck gesetzte Verbrennungsluft der Beschleunigungsdüse (107) der Ausstoßvorrichtungseinheit zuführt (133), und daß die erwärmte und unter Druck gesetzte Verbrennungsluft, die von dem Gasgenerator (103) kommt und zu der Turbine (131) der Kompressorturbineneinheit (130) geführt wird, zu einer Zerstäubungsdüse (136) geleitet wird (135), die in die Eingangsluftleitung (117) in Verarbeitungsrichtung abwärts von der Beschleunigungsdüse (107) eingepaßt ist, zum Bewirken einer Verbrennung identisch zu der, die in der Beschleunigungsdüse (107) auftritt, und daß die Gasmischung, die mittels dieser Verbrennung erzeugt wird und mit einer hohen Geschwindigkeit aus der Zerstäubungsdüse fließt, zum Diffundieren des Hauptkraftstoffs und zum Mischen desselben mit der Hauptverbrennungsluft verwendet wird, die von der Ausstoßvorrichtungseinheit kommt.

7. Ein Verfahren gemäß Anspruch 5, **dadurch gekennzeichnet, daß** der Hauptkraftstoff (10a) in die Gasmischung zugeführt wird, die aus der Zerstäubungsdüse (136) fließt, innerhalb der Zerstäubungsdüse oder an einem Punkt in Verarbeitungsrichtung abwärts von der Zerstäubungsdüse in der Eingangsluftleitung (117).

8. Ein Verfahren gemäß einem der Ansprüche 5 bis 7, **dadurch gekennzeichnet, daß** der Betrag der Eingangsluft, die in die Eingangsluftleitung (117) geleitet werden soll, gemäß einem Leistungsbedarf reguliert wird (121).

9. Eine Anordnung zum Erzeugen und Tragen erwärmter Luft zu einem Anwendungspunkt für die erwärmte Luft, wobei die Anordnung eine Luftleitung (14), entlang der Luft getragen wird, einen Gasgenerator (3) und eine Ausstoßvorrichtungseinheit (17) aufweist, mit der der Gasgenerator (3) verbunden ist und die in die Luftleitung (14) eingepaßt und mit einer Düse (12) versehen ist, die mit unter Druck gesetzter Luft von dem Gasgenerator (3) beliefert wird, **dadurch gekennzeichnet, daß** die Beschleunigungsdüse (12) Kraftstoffzuführelemente (9, 10) umfaßt, wobei die Beschleunigungsdüse (12) als eine Brennkammer zum Verbrennen des Kraftstoffs fungiert, der von den Zuführelementen (9, 10) geliefert wird, und die Gasmischung aus der Beschleunigungsdüse (12) mit einer erhöhten Geschwindigkeit fließt, wodurch die Luft, die in der Leitung (14) vorhanden ist, eingeschlossen und erwärmt wird.

10. Eine Anordnung gemäß Anspruch 9, **dadurch gekennzeichnet, daß** die Anordnung ferner eine separate Kompressorturbineneinheit (20) umfaßt, die mit dem Gasgenerator (3) verbunden ist und mit einem Kompressor (21) versehen ist, der die unter Druck gesetzte Verbrennungsluft zu der Beschleunigungsdüse (12) der Ausstoßvorrichtungseinheit (17) zuführt, und daß in Verarbeitungsrichtung abwärts von der Ausstoßvorrichtungseinheit (17) die Leitung (14) mit einer zusätzlichen Düse (24) versehen ist, die in die Kraftstoffzuführelemente (28) eingepaßt ist.

11. Eine Anordnung gemäß Anspruch 9 oder 10 zum Erzeugen erwärmter Luft und Tragen derselben zu einer Vorrichtung zum Trocknen eines Papiergewebes oder eines ähnlichen Gewebematerials, **dadurch gekennzeichnet, daß** die Trockenvorrichtung zumindest einen Trockenluftdüsenkasten (1) umfaßt, wobei das Gewebe, das getrocknet werden soll, angepaßt ist, um an demselben vorbeizulaufen, und der Düsenkasten (1) in die Luftleitung (14) eingepaßt ist, wobei die erwärmte Luft von dem Düsenkasten (1) in Kontakt mit der Gewebeoberfläche und zurück zu dem Düsenkasten (1) passiert.

12. Eine Brenneranordnung (102) für eine Verbrennungsvorrichtung (101), die mit einem Brennkasten (118) versehen ist, wobei die Brenneranordnung einen Gasgenerator (103) aufweist, der mit ersten Kraftstoffzuführelementen (111) versehen ist, und eine Luftleitung (117), die mit dem Brennkasten (118) verbunden ist, zum Leiten der Verbrennungsluft in den Brennkasten (118), wobei die Brenneranordnung (102) eine Ausstoßvorrichtungseinheit (125) aufweist, die in die Luftleitung (117) eingepaßt ist und eine Düse (107) umfaßt, zum Zuführen von unter Druck gesetzter Verbrennungsluft, und wobei die Brenneranordnung (102) ferner, zweite Kraftstoffzuführelemente (108) zum Zuführen des Hauptkraftstoffs in die Verbrennungsluft aufweist, die zu der Ausstoßvorrichtungseinheit (125) kommt, **dadurch gekennzeichnet, daß** innerhalb der Beschleunigungsdüse (107) die zweiten Kraftstoffzuführelemente (108) eingepaßt sind, wobei die Beschleunigungsdüse (107) als eine Brennkammer zum Verbrennen des Kraftstoffs funktioniert, der von den Zuführelementen (108) geliefert wird, wobei die erwärmte Gasmischung, die mit einer erhöhten Geschwindigkeit aus der Beschleunigungsdüse (107) fließt, die die Luft einschließt und erwärmt, in der Leitung (117) vorliegt.

13. Eine Anordnung gemäß Anspruch 12, **dadurch gekennzeichnet, daß** die Anordnung ferner eine separate Kompressorturbineneinheit (130) aufweist, die mit dem Gasgenerator (103) verbunden ist und mit einem Kompressor (132) zum Zuführen der unter Druck gesetzten Verbrennungsluft zu der Beschleunigungsdüse (107) der Ausstoßvorrichtungseinheit (125) versehen ist, und daß in Verarbeitungsrichtung abwärts von der Beschleunigungsdüse (107) die Eingangsluftleitung (117) mit einer Zerstäubungsdüse (136) zum Diffundieren des Kraftstoffs versehen ist.

14. Eine Brenneranordnung gemäß Anspruch 12 - 13, **dadurch gekennzeichnet, daß** die Eingangsluftleitung (117) mit Regulierelementen (121) versehen ist, zum Steuern gemäß einem Leistungsbedarf der Luftmenge, die in die Eingangsluftleitung (117) kommt.

## Revendications

1. Procédé de production et de transport d'air chaud jusqu'à son point d'application, ledit procédé comprenant l'utilisation d'un générateur de gaz (3), relié à une unité d'éjection (17) qui est montée dans un conduit d'air (14) et qui comprend une tuyère (12), le générateur de gaz (3) étant utilisé dans le procédé pour générer de l'air de combustion pressurisé qui est dirigé jusqu'à la tuyère (12), le mélange de gaz sortant par son orifice (15) dans le conduit d'air (14) enveloppant la tuyère (12) et produisant un effet d'éjection de façon à aspirer une partie de l'air se trouvant dans le conduit d'air (14), ledit air étant délivré à son point d'application, **caractérisé en ce que** la tuyère (12) utilisée dans le procédé est constituée par une tuyère d'accélération (12) qui est alimentée, par des éléments d'alimentation en carburant (9, 10), en un carburant qui brûle en totalité dans la tuyère d'accélération (12), et **en ce que** le mélange de gaz sort de l'orifice (15) de la tuyère d'accélération (12) à une vitesse accrue.

2. Procédé selon la revendication 1, **caractérisé en ce que** le générateur de gaz (3) est utilisé pour générer de l'air de combustion pressurisé et chauffé, qui est dirigé vers une turbine (21) d'un ensemble turbo-compresseur séparé (20) associé au générateur de gaz (3) pour entraîner un compresseur (22) connecté à celle-ci, qui délivre l'air de combustion pressurisé à la tuyère d'accélération (12), et **en ce que** l'air de combustion pressurisé et chauffé, délivré à la turbine (21) de l'ensemble turbo-compresseur (20) et provenant du générateur de gaz (3), est dirigé vers une tuyère supplémentaire (24) qui est montée dans le conduit (14) en un point situé en aval de l'unité d'éjection (17), ladite tuyère supplémentaire (24) effectuant une combustion supplémentaire pour produire un surplus de chaleur pour l'air chauffé s'écoulant dans le conduit d'air (14) et/ou pour brûler les impuretés susceptibles de se trouver dans des gaz de combustion.

3. Procédé de production d'air chaud selon la revendication 1 ou 2, ledit air chaud étant destiné à sécher un matériau en bande ou un flux de produits constitué de matières en vrac, **caractérisé en ce que** le procédé comprend l'utilisation d'un agencement qui comporte au moins deux distributeurs d'air de séchage superposés (1), la bande ou le flux de produits à sécher étant adapté pour défiler dans un espace (2) entre ceux-ci, lesdits distributeurs (1) étant reliés l'un à l'autre par ledit conduit d'air (14), ledit air chauffé passant du premier distributeur (1) vers le deuxième distributeur (1) à travers la bande ou le flux de produits et passant ensuite le long du conduit d'air (14) pour revenir au premier distributeur (1).

4. Procédé de production d'air chaud selon la revendication 1 ou 2, ledit air chaud étant destiné à sécher une bande de papier ou un matériau en bande similaire, **caractérisé en ce que** le procédé comprend l'utilisation d'un agencement qui comporte un distributeur d'air de séchage (1) monté au moins d'un côté de la bande, ladite bande à sécher étant adaptée pour défiler devant ledit distributeur (1) et ledit distributeur (1) étant pourvu dudit conduit d'air (14), l'air chauffé émanant du distributeur (1), passant contre la surface de la bande et revenant audit distributeur (1) et ensuite dans le conduit d'air (14).

5. Procédé d'alimentation en carburant et en air de combustion dans un appareil de combustion (101) équipé d'une chambre de combustion (118) et d'un ensemble formant brûleur (102) connecté à celle-ci, ledit ensemble formant brûleur (102) comprenant un générateur de gaz (103) et des éléments formant conduits (117) connectés à la chambre de combustion (118) afin de diriger l'air entrant faisant office d'air primaire de combustion jusque dans la chambre de combustion (118), ledit procédé comprenant l'utilisation d'une unité d'éjection (125), montée dans le conduit d'air entrant (117) et comprenant une tuyère (107) qui est alimentée en air de combustion pressurisé généré à l'aide du générateur de gaz (103) et sortant par un orifice (110) de la tuyère (107) dans le conduit d'air entrant (117) enveloppant la tuyère (107), ce qui aspire ledit air entrant selon un principe d'éjection, ledit procédé comprenant la délivrance de la quantité de carburant principal requise par l'appel de puissance dans l'air de combustion arrivant à et/ou émergeant de l'unité d'éjection (125), **caractérisé en ce que** la tuyère (107) est constituée par une tuyère d'accélération (107) équipée de moyens d'alimentation, dans laquelle l'air de combustion est délivré avec du carburant supplémentaire qui brûle au moins partiellement dans la tuyère d'accélération (107) et l'énergie de combustion réalise la gazéification du reste du carburant se trouvant dans la tuyère d'accélération (107), le mélange de gaz sortant de l'orifice (110) à une vitesse accrue et produisant un réchauffement.

6. Procédé selon la revendication 5, **caractérisé en ce que** le générateur de gaz (103) est utilisé pour produire l'air de combustion pressurisé et chauffé qui est dirigé (134) vers une turbine (131) d'un ensemble turbo-compresseur séparé (130) connecté au générateur de gaz (103), ladite turbine entraînant un compresseur (132) connecté à celle-ci et délivrant (133) l'air de combustion pressurisé à la tuyère d'accélération (107) de l'unité d'éjection, et **en ce que** l'air de combustion pressurisé et chauffé, provenant du générateur de gaz (103) et délivré à la turbine (131) de l'ensemble turbo-compresseur (130), est dirigé (135) vers une tuyère de vaporisation (136) montée dans le conduit d'air entrant (117) en aval de la tuyère d'accélération (107) afin d'effectuer une combustion identique à celle qui se produit dans la tuyère d'accélération (107), et le mélange de gaz produit par cette combustion et sortant de la tuyère de vaporisation à grande vitesse est utilisé pour diffuser le carburant principal et pour le mélanger à l'air primaire de combustion provenant de l'unité d'éjection.

7. Procédé selon la revendication 5, **caractérisé en ce que** le carburant principal (10a) est délivré dans le mélange de gaz sortant de la tuyère de vaporisation (136), à l'intérieur de la tuyère de vaporisation ou en un point situé en aval de la tuyère de vaporisation dans le conduit d'air entrant (117).

8. Procédé selon l'une quelconque des revendications 5 à 7, **caractérisé en ce que** la quantité d'air entrant devant être dirigé jusque dans le conduit d'air entrant (117) est régulée (121) en fonction d'un appel de puissance.

9. Dispositif pour produire et transporter de l'air chauffé en un point d'application de l'air chauffé, ledit dispositif comprenant un conduit d'air (14) le long duquel de l'air est transporté, un générateur de gaz (3) et une unité d'éjection (17), connectée au générateur de gaz (3), montée dans le conduit d'air (14) et pourvue d'une tuyère (12) qui est alimentée en air pressurisé à partir du générateur de gaz (3), **caractérisé en ce que** la tuyère d'accélération (12) comprend des éléments d'alimentation en carburant (9, 10), ladite tuyère d'accélération (12) faisant office de chambre de combustion pour brûler le carburant délivré par les moyens d'alimentation (9, 10) et le mélange de gaz sortant de la tuyère d'accélération (12) à une vitesse accrue, ce qui aspire et chauffe l'air se trouvant dans le conduit (14).

10. Dispositif selon la revendication 9, **caractérisé en ce qu'**il comprend en outre un ensemble turbo-compresseur séparé (20), connecté au générateur de gaz (3) et pourvu d'un compresseur (22) qui délivre l'air de combustion pressurisé à la tuyère d'accélération (12) de l'unité d'éjection (17), et **en ce que**, en aval de l'unité d'éjection (17), le conduit (14) est pourvu d'une tuyère supplémentaire (24) équipée d'éléments d'alimentation en carburant (28).

11. Dispositif selon la revendication 9 ou 10, permettant de produire de l'air chauffé et de le transporter jusqu'à un appareil destiné à sécher une bande de papier ou un matériau en bande similaire, **caractérisé en ce que** l'appareil de séchage comprend au moins un distributeur d'air de séchage (1), la bande à sécher étant adaptée pour défiler devant celui-ci, et le distributeur (1) est équipé dudit conduit d'air (14), l'air chauffé partant du distributeur (1), entrant en contact avec la surface de la bande et revenant audit distributeur (1).

12. Ensemble formant brûleur (102) pour un appareil de combustion (101) équipé d'une chambre de combustion (118), ledit ensemble brûleur comprenant un générateur de gaz (103), pourvu de premiers éléments d'alimentation en carburant (111), et un conduit d'air (117) connecté à la chambre de combustion (118) afin de conduite l'air de combustion jusque dans la chambre de combustion (118), ledit ensemble brûleur (102) comprenant une unité d'éjection (125) montée dans le conduit d'air (117) et comprenant une tuyère (107) destinée à délivrer de l'air de combustion pressurisé, et ledit ensemble brûleur (102) comprenant en outre des deuxièmes éléments d'alimentation en carburant (108) destinés à délivrer du carburant principal dans l'air de combustion arrivant à l'unité d'èjection (125), **caractérisé en ce que** lesdits deuxièmes éléments d'alimentation en carburant (108) sont montés à l'intérieur de la tuyère d'accélération (107), ladite tuyère d'accélération (107) faisant office de chambre de combustion pour brûler le carburant délivré par les éléments d'alimentation (108), et le mélange de gaz chauffé sortant de la tuyère d'accélération (107) à une vitesse accrue aspire et chauffe l'air se trouvant dans le conduit (117).

13. Ensemble selon la revendication 12, **caractérisé en ce qu'**il comprend en outre un ensemble turbo-compresseur séparé (130), connecté au générateur de gaz (103) et pourvu d'un compresseur (132) destiné à délivrer l'air de combustion pressurisé à la tuyère d'accélération (107) de l'unité d'éjection (125), et **en ce que**, en aval de la tuyère d'accélération (107), le conduit d'air entrant (117) est pourvu d'une tuyère de vaporisation (136) destinée à diffuser le carburant.

14. Ensemble brûleur selon la revendication 12 ou 13, **caractérisé en ce que** le conduit d'air entrant (117) est équipé d'éléments de régulation (121) destinés à réguler la quantité d'air entrant dans le conduit d'air entrant (117) en fonction d'un appel de puissance.
